# EUROPEAN PATENT APPLICATION

(11) **EP 3 121 002 A1**
(43) Date of publication of application: **25.01.2017**
(21) Application number: 16176509.4
(22) Date of filing: 27.06.2016
(51) Int. Cl.: B32B 17/06, B32B 17/10

(54) **SCRATCH RESISTANT LAYER OF ULTRA-THIN GLASS ON A SUBSTRATE FOR TOUCH SENSITIVE DISPLAY**

(30) Priority: 21.07.2015 US 201562194981 P
(71) Applicant: Panasonic Avionics Corporation, Lake Forest, CA 92630-8400 (US)
(72) Inventor: Jiang, Feng, Laguna Hills, CA California 92656 (US); Shah, Shrenik, Laguna Niguel, CA California 92677 (US)
(74) Representative: Gosnall, Toby

(57) **Abstract**

A cover for a touchscreen user interface of an inflight entertainment display. The cover includes a protective outer element having an external surface in which the surface comprises a layer of ultra-thin glass. The ultra-thin glass includes an inner surface and an opposing outer surface defining a thickness therebetween in a range of 0.02-0.15 mm. A protective inner element is disposed on the inner surface of the ultra-thin glass in which the protective inner element comprises a plastic. The cover is for use in covering a display element of a monitor.

## Description

### CROSS-REFERENCE TO RELATED APPLICATIONS

This application claims priority to U.S. provisional patent application Serial Number 62/194,981, filed on July 21, 2015. Priority to the provisional patent application is expressly claimed, and the disclosure of the provisional application is hereby incorporated herein by reference in its entirety and for all purposes.

### STATEMENT RE: FEDERALLY SPONSORED RESEARCH/DEVELOPMENT

### Not Applicable

### BACKGROUND

### 1. Technical Field

The present disclosure relates generally to a protective cover for an inflight entertainment display monitor, and more specifically to a method of creating a scratch resistant, impact resistant, and touch sensitive protective cover and applying the protective cover over a substrate for a touchscreen.

### 2. Description of the Related Art

Providing entertainment to airplane passengers during a flight has been common practice in commercial aviation to make the overall flying experience more enjoyable. In recent years, airlines have installed inflight entertainment systems including individual display monitors for each passenger. The inflight entertainment displays are typically installed in the seatback of the seat in front of the passenger, or in the bulkhead for passengers sitting in the first row.

In the past, inflight entertainment displays have been provided with an exterior composed of scratch resistant glass supplied under the trademark Gorilla Glass™ by Corning™. Gorilla Glass™ is commonly used as a coating for personal electronic devices because it exhibits both scratch resistant and shatter resistant characteristics.

Notwithstanding these advantages, testing has reportedly shown that Gorilla Glass™ is not Head Injury Compliant (HIC) for use on aircraft. In particular, various rules and regulations, e.g., 14 C.F.R. §§ 23.785, 25.785 and 29.785, require that a design is free of potentially injurious objects, sharp edges, protuberances, and hard surfaces in an emergency landing as a result of dynamic conditions specified in 14 C.F.R. §§ 23.562, 25.562 and 29.562. The requirement is such that a passenger making proper use of the equipment will not suffer serious injury. Hence, it is required that if a passenger's head strikes a display due to a sudden deceleration event, the display not shatter or project sharp edges or protuberances as a result of impact. While Gorilla Glass™ was believed to be shatter resistant, it nevertheless reportedly broke under head-impact tests with dummies and glass shards were produced that could further injure passengers (sharp edge traumas). Under those circumstances, Gorilla Glass™ does not appear to meet the foregoing requirement due to projection of sharp edges after forceful impacts.

To render the Gorilla Glass™ HIC compliant, an exterior coating of a PET (polyethylene terephthalate) film may be applied over the Gorilla Glass™. Therefore, if the Gorilla Glass™ is involved in a significant impact which may cause the Gorilla Glass™ to break, the PET film could capture the glass shards to prevent further injury.

However, there tends to be two problems associated with placing PET film over Gorilla Glass™: (1) the PET film scratches easily, and (2) the PET film has a coefficient of friction greater than glass and degrades usability of a touchscreen surface. In particular, the digits of a user's hand do not slide as smoothly over the surface when covered with the PET film as opposed to just Gorilla Glass™.

Accordingly, there is a need in the art for an improved protective cover for an inflight entertainment display which complies with governing rules and regulations by mitigating the projection of sharp objects (e.g., glass shards) in the event of a direct head impact, while at the same time providing a user-friendly surface which is scratch resistant and may exhibit desirable touch-sensitivity for an underlying touchscreen. Various aspects of the present disclosure address this particular need, as will be discussed in more detail below.

### BRIEF SUMMARY

To address the foregoing problems, the present disclosure proposes to replace the Gorilla Glass™ with a protective cover assembly including an external layer of ultra-thin glass adhered or bonded to an impact resistant plastic cover disposed over the display of a seatback monitor. The protective cover assembly is shatter resistant so as to comply with rules and regulations governing displays provided in aircraft, while at the same time providing a scratch resistant surface which has desirable galvanic skin conductivity properties to enable a user to easily interface with an underlying touchscreen monitor. The ultra-thin glass also has a lower coefficient of friction than conventional PET film to provide a more comfortable and user-friendly surface to interface with when using the touchscreen monitor.

In accordance with one embodiment of the present disclosure, there is provided a method of creating a scratch resistant and shatter resistant cover on a touchscreen user interface of an inflight entertainment unit. The method includes securing a layer of ultra-thin glass to an external surface of an impact resistant cover of an inflight entertainment display. The ultra-thin glass includes an inner surface and an opposing outer surface to define a thickness therebetween, with the thickness being between 0.02-0.15 mm. The inflight entertainment display is securable to a seatback of an airplane seat and adapted to provide a touch-sensitive digital user interface.

The layer of ultra-thin glass used in the securing step may be of a thickness ranging between 0.03-0.10 mm.

The securing step may include adhering the layer of ultra-thin glass to the external surface of the impact resistant cover using an adhesive. The adhesive may be an acrylic based, clear adhesive.

The impact resistant cover used in the securing step may be formed from a plastic material.

The present disclosure will be best understood by reference to the following detailed description when read in conjunction with the accompanying drawings.

### BRIEF DESCRIPTION OF THE DRAWINGS

These and other features and advantages of the various embodiments disclosed herein will be better understood with respect to the following description and drawings, in which:
Figure 1 is a perspective view of a pair of aircraft seats, each seat having an inflight entertainment display integrated into a backrest portion thereof;
Figure 2 is an upper perspective, partial cutaway view of a display monitor configured for use with the inflight entertainment display depicted in Figure 1;
Figure 3 is an enlarged cutaway view of the display monitor depicted in Figure 2; and
Figure 4 is an upper perspective view of the display monitor having a fractured display surface safely retained within the display monitor.

Common reference numerals are used throughout the drawings and the detailed description to indicate the same elements.

### DETAILED DESCRIPTION

The detailed description set forth below in connection with the appended drawings is intended as a description of certain embodiments of a scratch resistant and shatter resistant surface for an inflight entertainment display, and a related method of forming the same, and is not intended to represent the only forms that may be developed or utilized. The description sets forth the various structure and/or functions in connection with the illustrated embodiments, but it is to be understood, however, that the same or equivalent structure and/or functions may be accomplished by different embodiments that are also intended to be encompassed within the scope of the present disclosure. It is further understood that the use of relational terms such as first and second, and the like are used solely to distinguish one entity from another without necessarily requiring or implying any actual such relationship or order between such entities.

Various aspects of the present disclosure relate to a scratch resistant and shatter resistant exterior cover assembly for an inflight entertainment display. The external cover assembly is preferably compliant with Head Injury Criterion (HIC), as set forth in various rules and regulations pertaining to the aviation industry. The external cover assembly described herein not only provides scratch resistance and shatter resistance to the inflight entertainment display, the cover also is configured so as not to insulate the inflight entertainment display, and thus, maintains touch sensitivity to allow a user to interface with the entertainment system through an underlying touchscreen.

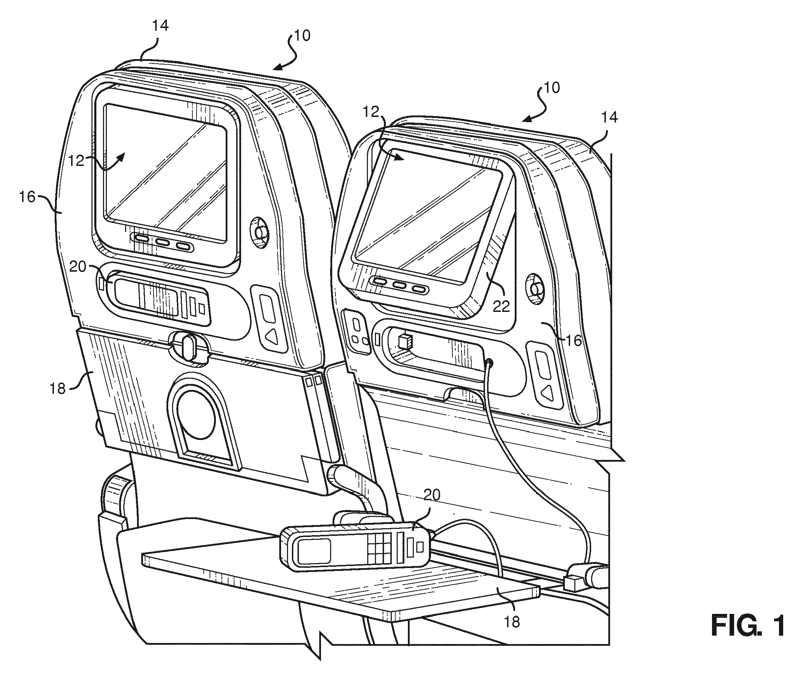

Referring now to Figure 1, there is depicted a pair of seats 10 specifically configured for use in an aircraft, wherein each seat 10 is provided with an inflight entertainment display 12. The seats 10 include a cushioned seating portion 14 having a seat back 16 and selectively deployable tray 18. In the perspective shown in Figure 1, the tray 18 coupled to the left-most seat 10 is shown in a stowed configuration, while the tray 18 coupled to the right-most seat 10 is shown in a deployed configuration. In this respect, the inflight entertainment display 12 does not interfere with the normal operation of the tray 18.

The inflight entertainment display 12 is integrated into the seat back 16 of each seat 10 and is adapted to display digital content for a passenger facing the inflight entertainment display 12. The inflight entertainment display 12 preferably includes a touchscreen display, although a separate remote 20 may also be used for user inputs, either separate from a touchscreen, or in addition to a touchscreen. For instance, the remote 20 may be useful for video games or typing, wherein repeated inputs may be difficult to make on the touchscreen display, or may be an annoyance to the person seated in the seat 10. In the embodiment depicted in Figure 1, the remote 20 may be stowed in a cavity formed in the seatback 16 during periods of nonuse.

The inflight entertainment display 12 includes a housing 22 connected to the seat back 16 in a manner which may allow the inflight entertainment display 12 to be selectively tilted by a user to achieve an optimal viewing angle. The housing 22 may not only house a display monitor, but also electronics and wiring needed for operation of the display monitor. The display monitor may be in communication with a host computer or server which may control the content displayed on a plurality of inflight entertainment displays 12 located throughout the aircraft. The content displayed on the inflight entertainment displays 12 may include television shows, movies, inflight safety videos, video games, information about the destination, real time flight information such as altitude, speed, heading, as well as an interface for services on the aircraft, such as the ability to order food and/or drinks, or request other services from an in-flight attendant.

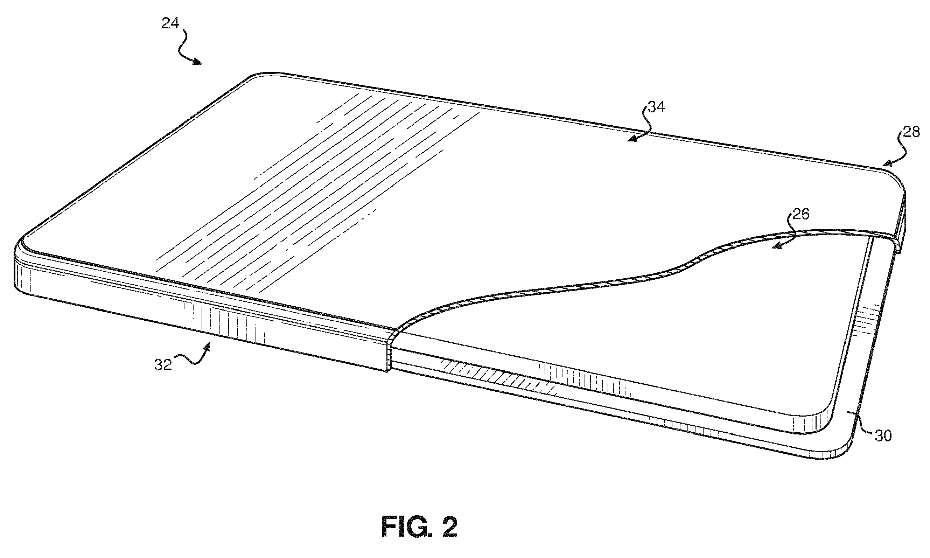

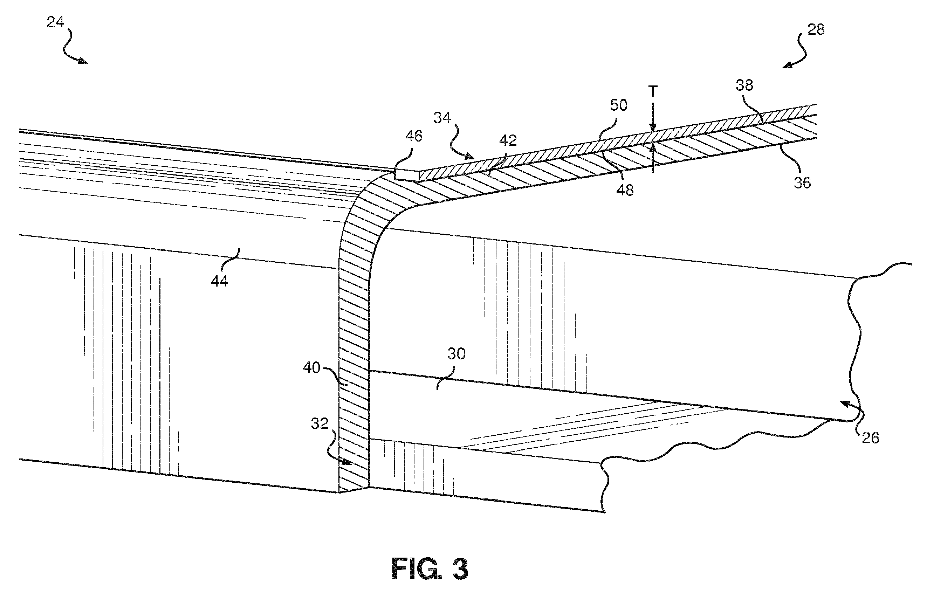

Referring now to Figures 2 and 3, there is depicted an exemplary embodiment of a display monitor 24 configured for use in an inflight entertainment display 12. In particular, the display monitor 24 shown in Figures 2 and 3 has been removed from the housing 22 for purposes of more particularly illustrating the components included in the display monitor 24. The display monitor 24 includes a display element 26 having a protective cover assembly 28 applied thereto to protect the display element 26 from scratching and to enhance the overall safety of the display element 26 in the event of an impact with the display element 26 by mitigating the likelihood that the display element 26 would shatter and emit shards which could harm passengers within the aircraft.

Figures 2 and 3 are both partial cutaway views to illustrate the various layers or components within the display monitor 24. In general, the display monitor 24 includes a base 30 or frame upon which the display element 26 is mounted, with the cover assembly 28 extending over the base 30 and display element 26.

The display element 26 may be any display element currently known or later developed in the art. For instance, the display element 26 may include a liquid crystal display (LCD), light emitting diode (LED) display, plasma display, or organic light emitting diode display. The display element 26 may include a touchscreen to allow a user to enter input commands into the inflight entertainment system by touching, pressing, or otherwise interfacing with the screen by making gestures over the screen with the user's finger(s). The touchscreen employed on the display element 26 may be similar to the touchscreen technology used on various touch-sensitive electronic devices that are readily available, such as the Apple iPad™, the Apple iPhone™, the Microsoft Surface™, or the Samsung Galaxy™. According to one embodiment, the touchscreen is a capacitive type, based on either surface capacitance or projected capacitance. However, a projected capacitance type is preferred due to greater resolution and because it allows operation without direct contact and may be coated with further layers. In another, embodiment, the touchscreen is a resistive type or may operate by detecting the skin's electrical conductivity, commonly referred to as the Galvanic Skin Response. As will be described in more detail below, the protective cover assembly 28 is specifically configured and adapted that the touchscreen of the display element 26 underneath can detect the location of an object or objects on the protective cover assembly 28, e.g., digits of a person's hand. In other words, the protective cover assembly 28 is preferably constructed of materials, and is of a thickness that is not only shatter-resistant, but also has low surface friction (objects easily slide thereover), and does not have a substantial insulating effect on the ability of the touchscreen to detect the electricity conductivity of the user's skin during normal operation of the touchscreen. Moreover, the outer surface of the protective cover assembly 28 is scratch resistant and has a mohs' hardness of at least 4.

The cover assembly 28 used to cover the display element 26 generally includes a protective inner element 32 and a protective outer element 34. The protective inner element 32 includes an inner surface 36 and an opposing outer surface 38, with the protective inner element 32 being configured to extend over the display element 26 and at least partially over the base 30. The protective inner element 32 may extend completely around the display element 26 and base 30, except to allow space for any wiring or connection which may be needed to provide power and data to the display element 26. In this respect, the protective inner element 32 may include a peripheral wall 40 and a central display face 42, with the peripheral wall 40 circumnavigating the central display face 42. Referring now specifically to Figure 3, the peripheral wall 40 may transition to the display face 42 via a rounded corner 44, with the outer surface of the corner 44 defining a shoulder 46 adjacent the central display face 42, with the outer surface 38 of the display face 42 being recessed relative to an upper rim of the shoulder 46. The recess is to accommodate the protective outer element 34 and to allow an outer surface of the protective outer element 34 to be substantially flush with the outer surface of the shoulder 44.

According to one embodiment, the protective inner element 32 is fabricated from a plastic material, such as polycarbonate or other similar material, with at least the central display face 42 being transparent to allow a user to easily view content displayed on the display element 26. The plastic material used in forming the protective inner element 32 is preferably also resistant against tearing or bursting upon impact.

The protective outer element 34 is an ultra-thin layer or sheet which extends over the outer surface 38 of the display face 42 of the protective inner element 32. Preferably, the shoulder 46 of the protective inner element 32 circumnavigates the protective outer element 34 when the protective outer element 34 is placed over the protective inner element 23, with the protective outer element 34 being substantially flush with the rim of the shoulder 46. The protective outer element 34 includes an inner surface 48 and an opposing outer surface 50 to define a thickness, "T," therebetween. The thickness T may be within a range of 0.02-0.15 mm, and more preferably between 0.03-0.10 mm.

The protective outer element 34 is fabricated from impact resistant, scratch resistant, and shatter resistant material. Exemplary protective outer elements include D263 T eco thin glass from Schott North America Inc. and SG90R PET film from Kimoto Co., of Japan, with each protective outer element having a thickness of 0.03 mm. The use of glass when fabricating the protective outer element provides the user with a smooth, familiar surface when moving one's finger thereon for interfacing with the touchscreen. Along these lines, glass has a coefficient of friction that is similar to that of a conventional touchscreen, and less than that of PET film, which had been previously used as a protective film, and thus, the user's finger may slide or glide more effortlessly over the protective outer element 34, which enhances the overall ease-of-use of the touchscreen.

The protective outer element 34 is bonded, adhered or otherwise secured to the protective inner element 32. According to one embodiment, an adhesive is used which prevents fractured pieces of the protective outer element 34 from becoming dislodged from the protective inner element 32 in the event of an impact to the cover assembly 28. The adhesive may be an acrylic based, optically clear adhesive. Of course other clear adhesives or bonding techniques known by those skilled in the art may also be used.

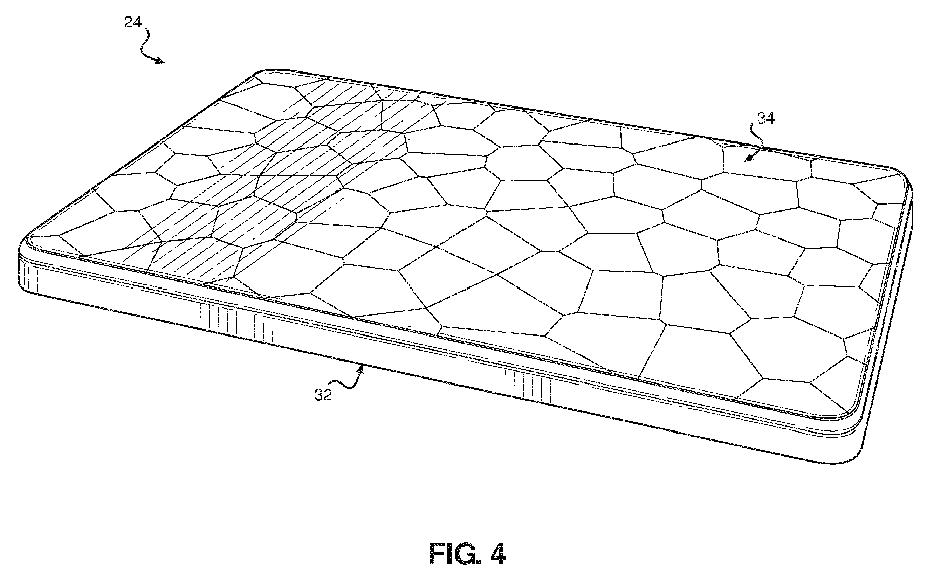

Figure 4 is an exemplary depiction of a fractured protective outer element 34 which remains adhered to the protective inner element 32. In this respect, despite the fractured nature of the protective outer element 34, the cover assembly 28 does not include any shards, protuberances, or other sharp objects which extend outwardly in violation of rules and regulations governing the aircraft industry.

The protective inner and outer elements 32, 34 are configured to protect the underlying display element 26 from scratching. Along these lines, the ultra-thin protective outer element 34 formed of glass is much more scratch resistant than conventional scratch resistant layers formed of PET film, since glass typically has a mohs' hardness of 4-7, while conventional PET film is of a mohs' hardness of approximately 3-4. Therefore, the entire inflight entertainment display 12 can be much more scratch resistant during daily use and more impact resistant during emergency conditions.

When the protective cover assembly 28 is used in the inflight entertainment display 12 of an aircraft, the display 12 exhibits enhanced scratch resistance and impact resistance. In this respect, in the event of a sudden deceleration on the aircraft which causes the passenger's head seated behind the display 12 to impact the display 12, the protective cover assembly 28 is designed to prevent shards from projecting outwardly so as to mitigate injury to the passenger. In particular, the ultra-thin protective outer element 34 may fracture as shown in Figure 4. However, the adhesive used to adhere the protective outer element 34 to the protective inner element 32 may prevent the fractured pieces of the protective outer element 34 from breaking away.

It is contemplated that the protective cover assembly 28 may be installed on the display element 24 during the original manufacture of the display element 24. However, it is also contemplated that other embodiments of the protective cover assembly 28 may be adapted for retrofit onto an existing inflight entertainment display. In this respect, the protective cover assembly 28 may include an assembly or composition of layers which may be adhered to the existing display monitor. For instance, the layered assembly may include an outer layer of ultra-thin glass, as described above adhered to a layer of PC/PET film, which includes an adhesive layer for adhering the assembly to the display monitor. This assembly may be selectively applied on the outer surface of the display monitor. Should the assembly become damaged, it can be easily replaced with a new assembly.

With the protective cover described herein, the life of a display monitor may be extended, thereby reducing maintenance cost and improving a user's experience by giving the user a real glass surface as the touch panel.

The particulars shown herein are by way of example only for purposes of illustrative discussion, and are not presented in the cause of providing what is believed to be most useful and readily understood description of the principles and conceptual aspects of the various embodiments of the present disclosure. In this regard, no attempt is made to show any more detail than is necessary for a fundamental understanding of the different features of the various embodiments, the description taken with the drawings making apparent to those skilled in the art how these may be implemented in practice.

## Claims

1. A method of creating a scratch resistant and shatter resistant cover on a touchscreen user interface of an inflight entertainment unit, the method comprising:
securing a layer of ultra-thin glass to an external surface of an impact resistant cover of an inflight entertainment display, the ultra-thin glass having an inner surface and an opposing outer surface to define a thickness therebetween, the thickness being between 0.02-0.15 mm;
the inflight entertainment display being securable to a seatback of an airplane seat and adapted to provide a touch-sensitive digital user interface.

2. The method recited in Claim 1, wherein the layer of ultra-thin glass used in the securing step is of a thickness ranging between 0.03-0.10 mm.

3. The method recited in Claim 1 or Claim 2, wherein the impact resistant cover used in the securing step is formed from a plastic material.

4. The method recited in any preceding Claim, wherein the securing step includes adhering the layer of ultra-thin glass to the external surface of the impact resistant cover using an adhesive, and optionally wherein the adhesive used in adhering the layer of ultra-thin glass to the external surface of the impact resistant cover is an acrylic-based, clear adhesive.

5. The method recited in any preceding Claim, wherein the impact resistant cover used in the securing step is formed from a plastic material.

6. The method recited in any preceding Claim, wherein the layer of ultra-thin glass used in the securing step is of a thickness ranging between 0.03-0.10 mm.

7. A cover for a touchscreen user interface of an inflight entertainment display, the cover comprising:
a protective outer element including an external surface comprising a layer of ultra-thin glass, the ultra-thin glass including an inner surface and an opposing outer surface defining a thickness therebetween, the thickness being between 0.02-0.15 mm;
a protective inner element disposed on the inner surface of the ultra-thin glass, the protective inner element being comprised of a plastic.

8. The cover of Claim 7, wherein the thickness is between 0.03-0.10 mm.

9. The cover of Claim 7 or Claim 8, wherein the protective inner element is bonded to the ultra-thin glass.

10. The cover of any of Claims 7 to 9, furthering comprising an adhesive disposed between the protective outer element and the protective inner element, and optionally wherein the adhesive comprises an acrylic based, optically clear material.

11. The cover of any of Claims 7 to 10, wherein the plastic comprises a polycarbonate.

12. The cover of any of Claims 7 to 11, wherein the protective inner element is bonded to the ultra-thin glass.

13. The cover of any of Claims 7 to 12, wherein the protective inner element includes a recess in which the outer protective element is received.

14. A display monitor for an entertainment display in a vehicle, the display monitor comprising:
a protective outer element including an external surface comprising a layer of ultra-thin glass, the ultra-thin glass including an inner surface and an opposing outer surface defining a thickness therebetween, the thickness being between 0.02-0.15 mm;
a base;
a display element disposed on the base, the display element being between the protective outer element and the base; and
a protective inner element disposed between the protective outer element and the display element, the protective inner element being comprised of plastic.

15. The display monitor of Claim 14, wherein any one or more of:
• the thickness is between 0.03-0.10 mm;
• the protective inner element is bonded to the ultra-thin glass;
• the plastic comprises a polycarbonate; and
• the protective inner element includes a recess in which the outer protective element is received.
